(19) Europäisches Patentamt
European Patent Office
Office européen des brevets

(11) Veröffentlichungsnummer: **0 278 285 A1**

(12) **EUROPÄISCHE PATENTANMELDUNG**

(21) Anmeldenummer: **88100890.8**

(22) Anmeldetag: **22.01.88**

(51) Int. Cl.[4]: **C07C 125/067** , B01J 20/18 , C01B 33/26 , A01N 47/22

(30) Priorität: **06.02.87 DE 3703620**

(43) Veröffentlichungstag der Anmeldung: **17.08.88 Patentblatt 88/33**

(84) Benannte Vertragsstaaten: **BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Kersten, Siegfried, Dr.**
**Max-Slevogt-Strasse 21**
**D-6710 Frankenthal(DE)**
Erfinder: **Huber, Guenter**
**Fuellergasse 21**
**D-6733 Hassloch(DE)**
Erfinder: **Kuhn, Hans-Joachim**
**Friedrich-Burschell-Weg 19**
**D-6700 Ludwigshafen(DE)**

(54) **Verwendung von Molekularsieb zur Stabilisierung von insektiziden Carbaminsäureestern.**

(57) Stabilisierung von Carbaminsäureestern der allgemeinen Formel

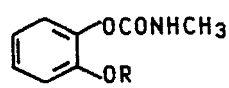

in der
R $C_1$-$C_4$-Alkyl oder die Gruppe

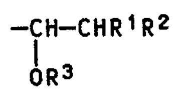

bedeutet, wobei
$R^1$ Wasserstoff, Halogen oder $C_1$-$C_4$-Alkyl,
$R^2$ Wasserstoff oder $C_1$-$C_4$ Alkyl und
$R^3$ $C_1$-$C_4$-Alkyl
sein kann, durch Zusatz einer wirksamen Menge Molekularsieb als Stabilisierungsmittel.

EP 0 278 285 A1

## Verwendung von Molekularsieb zur Stabilisierung von insektiziden Carbaminsäureestern

Die vorliegende Erfindung betrifft die Verwendung von Molekularsieb zur Stabilisierung von Carbaminsäureestern der allgemeinen Formel I

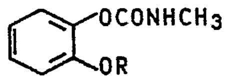

(I),

in der
R $C_1$-$C_4$-Alkyl oder die Gruppe

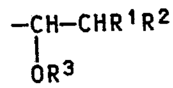

bedeutet, wobei
$R^1$ Wasserstoff, Halogen oder $C_1$-$C_4$-Alkyl,
$R^2$ Wasserstoff oder $C_1$-$C_4$ Alkyl und
$R^3$ $C_1$-$C_4$-Alkyl
sein kann.

Carbaminsäureester dieses Typs werden sowohl durch Säuren als auch durch Basen relativ leicht gespalten. An sich ist diese Spaltbarkeit erwünscht, weil sie zu einem raschen Abbau nach der Anwendung der Mittel führt (geringe Persistenz; keine Akkumulation).

Naturgemäß ist die leichte Spaltbarkeit aber für die Herstellung und Formulierung der Wirkstoffe und die Lagerhaltung fertiger Spritzmittel nachteilig. Die genaue Einstellung des Neutralpunkts ist nicht nur schwierig, es zeigt sich auch, daß vor allem geringe Verunreinigungen zu einer Beschleunigung der Zersetzung führen. Ein nachweisbares Spaltprodukt ist z.B. Chlorwasserstoff.

Aus dieser Kenntnis heraus hat man, außer durch Verbesserung der Reinheit, versucht, durch den Zusatz von säurebindenden Hilfsstoffen wie tertiären Aminen, Säureamiden, basischen Acetaten, basischen Ionenaustauschern oder Alkoholaten schwacher Basen die Zersetzung zu vermindern.

Abgesehen davon, daß diese Zusätze in der Regel die basische Spaltung der Carbaminesterstruktur fördern, verhindern sie den Zerfall augrund anderer Zerfallsmechanismen anscheinend nicht.

Es besteht daher die Aufgabe, die Zersetzung von Carbaminsäureestern zu verlangsamen, ohne den nach der Anwendung erwünschten Zerfall zu behindern.

Die Aufgabe wird erfindungsgemäß dadurch gelöst, daß man dem Carbaminsäureester I oder ihren zum Verkehr bestimmten Zubereitungen (Formulierungen) Molekularsieb zusetzt oder beigibt.

Im einzelnen hat der Substituent R in Formel I folgende Bedeutungen:
-$C_1$-$C_4$-Alkyl, wie Methyl, Ethyl, n-Propyl, iso-Propyl, n-Butyl, iso-Butyl, sec.-Butyl und tert.-Butyl,
-die Gruppe

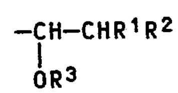

wobei
$R^1$ -Wasserstoff,
- Halogen, wie Fluor, Chlor oder Brom, bevorzugt Chlor,
- $C_1$-$C_4$-Alkyl, wie Methyl, Ethyl, n-Propyl, iso-Propyl, n-Butyl, iso-Butyl, sec.-Butyl und tert.-Butyl,
$R^2$ -Wasserstoff,
- $C_1$-$C_4$-Alkyl, wie Methyl, Ethyl, n-Propyl, iso-Propyl, n-Butyl, iso-Butyl, sec.-Butyl und tert.-Butyl,
$R^3$ -$C_1$-$C_4$-Alkyl, wie Methyl, Ethyl, n-Propyl, iso-Propyl, n-Butyl, iso-Butyl, sec.-Butyl und tert.-Butyl, bevorzugt Methyl bedeutet.

Erfindungsgemäß wirksames Molekularsieb weist Porenweiten von z.B. 0,4 bis 1 mm auf; geeignete Sorten von Molekularsieb sind handelsüblich. Eine Beschreibung der Herstellung und Wirkungsweise und der Bestimmung der Eigenschaften von Molekularsieben ist z.B. O. Grübner et al, Molekularsiebe, Berlin

1968 oder C. K. Hersk, Molecular Sieves, New York 1961 zu entnehmen.

Der Zusatz von Molekularsieb kann durch Beimischung eines entsprechend feinen Pulvers geschehen oder, falls es sich um flüssige Zubereitungen handelt, auch grober Stücke, Kugeln u.s.w. oder man kann des Molekularsieb separat in einem durchlässigen Behälter, z.B. einem Säckchen, dem Gebinde beigeben.

Man setzt 0,1 bis 50 Gew.%, bevorzugt 0,1 bis 10 Gew.%, besonders bevorzugt 0,1 bis 3 Gew.%, bezogen auf die Carbaminsäureester I ein; aber natürlich sind geringere Mengen nicht unwirksam und höhere nicht schädlich.

Es ist zweckmäßig, das verwendete Molekularsieb vor der Verwendung zu trocknen; jedoch ist auch mit Wasserdampf gesättigtes Molekularsieb grundsätzlich wirksam, wie nachstehend gezeigt wird. Dies ist ein Vorteil, da erfahrungsgemäß Luftfeuchte bei der Verarbeitung der Wirkstoffe sich nicht ausschließen läßt.

A. Herstellung von mit Wasser gesättigtem Molekularsieb

Molekularsieb der Handelsmarke Sylosiv wurde über die Dampfphase gesättigt, indem Molekularsieb und Wasser in getrennten Schalen in einem geschlossenen Gefäß 24 Stunden bei Raumtemperatur sich selbst überlassen wurde. Anschließend wurde das Molekularsieb bis zur Gewichtskonstanz bei 45°C - 50°C gehalten.

Gehalt an Wasser in verschiedenen Typen von Molekularsieb:

A 4/$H_2O$ 15,9 % $H_2O$ (A 4 = 0,4 nm Porendurchmesser)
A 5/$H_2O$ 16,8 % $H_2O$ (A 5 = 0,5 nm Porendurchmesser)
A10/$H_2O$ 24,4 % $H_2O$ (A10 = 1,0 nm Porendurchmesser)
(Anwendung siehe Tabelle 1-3)

B. Anwendungsbeispiele

Beispiel 1

Eine genau abgewogene Menge des frisch hergestellten Wirkstoffs Ia

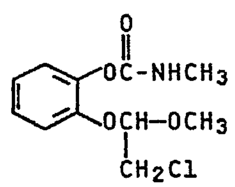

(Ia)

wurde mit einer genau abgewogenen Menge Molekularsieb versetzt und intensiv in einer Glasflasche gemischt. Ausreichend große Proben (ca. 10 g) wurden in Glasstöpselflaschen jeweils bei 60°C, 50°C und Raumtemperatur gelagert. Vergleichsmuster ohne Zusatz wurden entsprechend behandelt. Durch HPLC und GC wurden die Proben überwacht. Die Ergebnisse sind den nachstehenden Tabellen 1 bis 3 zu entnehmen.

Tabelle 1: Versuche mit Molekularsieb A4

Stabilisation von Ia mit Molekularsieb; als Beginn der Zersetzung gilt der Nachweis von Spaltprodukten wie Chlorwasserstoff

| Molekularsieb | Zersetzung nach einer Lagerzeit in Tagen bei | |
|---|---|---|
| Menge % | 50⁰C | 60⁰C |
| Vergleich | 75 - 85 | 15 - 19 |
| aa) trockenes Molekularsieb | | |
| 3 % | >180 | >180 |
| 2 % | >180 | 120 |
| 1 % | >180 | 68 |
| 0,5 % | >180 | 44 |
| 0,25 % | >180 | 31 |
| 0,1 % | 180 | 25 |
| ab) feuchtes Molekularsieb (15,9 % Wasser) | | |
| 2 % | >150 | 68 |
| 1 % | >150 | 48 |
| 0,5 % | >150 | 34 |
| 0,25 | >150 | 28 |
| 0,1 % | >150 | 20 |

Tabelle 2: Versuche mit Molekularsieb A5

| Menge % | Lagerzeit in Tagen bei 50°C | 60°C |
|---|---|---|
| Vergleich | 75 - 85 | 15 - 19 |
| ba) trocken | | |
| 3 % | >180 | 77 |
| 2 % | >180 | 66 |
| 1 % | >180 | 45 |
| 0,5 % | >180 | 30 |
| 0,25 % | >180 | 25 |
| 0,1 % | >180 | 22 |
| bb) feucht (16,8 % Wasser) | | |
| 3 % | >180 | 51 |
| 2 % | >180 | 48 |
| 1 % | >180 | 30 |
| 0,5 % | >180 | 21 |
| 0,1 % | >180 | 20 |

Tabelle 3: Versuche mit Molekularsieb A10

| | Menge % | Lagerzeit in Tagen bei 50°C | 60°C |
|---|---|---|---|
| Vergleich | | 75 - 85 | 15 - 19 |
| trocken | 3 % | >120 | 103 |
| feucht | 3 % | >120 | 54 |
| feucht | 2 % | >120 | 48 |
| feucht | 1 % | >120 | 37 |
| feucht | 0,5 % | >120 | 28 |
| A10 | 3 % | >120 | 105 |

Beispiel 2

Eine Probe ohne Stabilisator wurde 8 Tage lang bei 60°C gelagert. Durch Gaschromatographie konnten in ihr Zersetzungsprodukte nachgewiesen werden.

Nach Zumischen von 3 % Molekularsieb Sylosiv A4 sank innerhalb von 24 Stunden während der Lagerung bei 60°C der Gehalt an Zersetzungsprodukten unter die Nachweisgrenze von 1 ppm und trat

danach nicht wieder auf; der Versuch wurde weitere 150 Tage fortgesetzt, ohne daß weitere Zersetzung beobachtet wurde.

Eine Probe ohne Molekularsieb zersetzte sich nach 21 Tagen, wobei sie braun wurde und sich - schließlich verflüssigte.

Beispiel 3

Stabilisation von Ia mit Molekularsieb ("Fernwirkung")

a) Molekularsieb des Typs A4 wurde in eine kleine Flasche gefüllt und zu einer Wirkstoffprobe gestellt, so daß nur über den Dampfraum Kontakt bestand. Bei einer Lagertemperatur von 60°C wurde eine Lagerzeit länger als 150 Tage beobachtet, ohen daß Zersetzungsprodukte nachgewiesen werden konnten.

b) Molekularsieb des Typs A4 wurde in eine perforierte Polyethylentüte gefüllt und in den Dampfraum einer Probe Ia gebracht. Bei einer Lagertemperatur von 60°C konnte eine Lagerzeit von 150 Tagen erreicht werden; danach trat Zersetzung auf.

c) Molekularsieb des Typs A4 wurde in einen perforierten Hohlstab gefüllt, der in eine 30 kg-Probe Ia eingeführt wurde. Bei Raumtemperatur konnte eine Lagerzeit von über 150 Tagen ohne Zersetzung beobachtet werden.

d) Vergleichsprobe: Die Wirkstoffprobe wurde bei 60°C gelagert; nach 15 bis 19 Tagen trat Zersetzung auf.

**Ansprüche**

1. Verwendung von Molekularsieb zur Stabilisierung von Carbaminsäureestern der allgemeinen Formel I

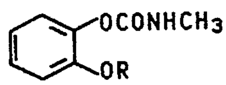

(I),

in der
R $C_1$-$C_4$-Alkyl oder die Gruppe

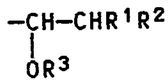

bedeutet, wobei
$R^1$ Wasserstoff, Halogen oder $C_1$-$C_4$-Alkyl,
$R^2$ Wasserstoff oder $C_1$-$C_4$ Alkyl und
$R^3$ $C_1$-$C_4$-Alkyl
sein kann, dadurch gekennzeichnet, daß man eine wirksame Menge Molekularsieb zusetzt.

2. Verwendung von Molekularsieb zur Stabilisierung von Carbaminsäureestern I nach Anspruch 1, dadurch gekennzeichnet, daß man Molekularsieb mit Porendurchmessern von 0,4 bis 1 nm zusetzt.

3. Verwendung von Molekularsieb zur Stabilisierung von Carbaminsäureestern I nach Anspruch 1, dadurch gekennzeichnet, daß man 0,1 bis 50 Gew.% Molekularsieb bezogen auf den Carbaminsäureester I zusetzt.

4. Verwendung von Molekularsieb zur Stabilisierung von Carbaminsäureestern I nach Anspruch 1, dadurch gekennzeichnet, daß man 0,1 bis 10 Gew.% Molekularsieb bezogen auf den Carbaminsäureester I zusetzt.

5. Verfahren zur Stabilisierung von Carbaminsäureestern der allgemeinen Formel I nach Anspruch 1, dadurch gekennzeichnet, daß man eine wirksame Menge Molekularsieb zusetzt.

6. Insektizides Mittel auf der Basis von Carbaminsäureestern der allgemeinen Formel I nach Anspruch 1, dadurch gekennzeichnet, daß es zur Stabilisierung eine wirksame Menge Molekularsieb enthält.

Europäisches Patentamt

# EUROPÄISCHER RECHERCHENBERICHT

Nummer der Anmeldung

EP 88100890.8

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| D,A | OTTO GRUBNER, PAVEL JIRŮ UND MILOŠ RÅLEK "Molekularsiebe", 1968, Band 12<br>VEB DEUTSCHER VERLAG DER WISSENSCHAFTEN, Berlin<br>Seiten 71,85,88,89,99,110,111, 116,117<br>---- | 1 | C 07 C 125/067<br>B 01 J 20/18<br>C 01 B 33/26<br>A 01 N 47/22 |
| | | | RECHERCHIERTE SACHGEBIETE (Int. Cl.4) |
| | | | C 07 C 125/00<br>B 01 J<br>C 01 B<br>A 01 N |

Der vorliegende Recherchenbericht wurde für alle Patentansprüche erstellt.

| Recherchenort | Abschlußdatum der Recherche | Prüfer |
|---|---|---|
| WIEN | 30-03-1988 | HEIN |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument